# EUROPEAN PATENT SPECIFICATION

(11) **EP 3 726 721 B1**
(45) Date of publication and mention of the grant of the patent: **25.01.2023**
(21) Application number: 19170425.3
(22) Date of filing: 19.04.2019
(51) Int. Cl.: H02M 7/483

(54) **MMC SUBMODULE SELECTION**
MMC-SUBMODULAUSWAHL
SÉLECTION DE SOUS-MODULE MMC

(43) Date of publication of application: 21.10.2020
(73) Proprietor: General Electric Technology GmbH, 5400 Baden (CH)
(72) Inventor: DE PREVILLE, Guillaume, 91300 MASSY (FR); BREHAUT, Stéphane, 91300 MASSY (FR)
(74) Representative: Brevalex

(56) References cited:
- DARUS ROSHEILA ET AL: "A Modified Voltage Balancing Algorithm for the Modular Multilevel Converter: Evaluation for Staircase and Phase-Disposition PWM", IEEE TRANSACTIONS ON POWER ELECTRONICS, INSTITUTE OF ELECTRICAL AND ELECTRONICS ENGINEERS, USA, vol. 30, no. 8, 1 August 2015 (2015-08-01) , pages 4119-4127, XP011574692, ISSN: 0885-8993, DOI: 10.1109/TPEL.2014.2359005 [retrieved on 2015-03-05]
- QIN JIANGCHAO ET AL: "Reduced Switching-Frequency Voltage-Balancing Strategies for Modular Multilevel HVDC Converters", IEEE TRANSACTIONS ON POWER DELIVERY, IEEE SERVICE CENTER, NEW YORK, NY, US, vol. 28, no. 4, 1 October 2013 (2013-10-01), pages 2403-2410, XP011528420, ISSN: 0885-8977, DOI: 10.1109/TPWRD.2013.2271615 [retrieved on 2013-09-30]
- ANTONIO-FERREIRA ABEL ET AL: "Comparison of cell selection methods for modular multilevel converters", 2016 IEEE 16TH INTERNATIONAL CONFERENCE ON ENVIRONMENT AND ELECTRICAL ENGINEERING (EEEIC), IEEE, 7 June 2016 (2016-06-07), pages 1-8, XP032954785, DOI: 10.1109/EEEIC.2016.7555608 [retrieved on 2016-08-29]

## Description

### Field of the Invention

The present disclosure relates to a method for selecting one or more submodules of a valve of modular multilevel converter in order to generate a desired valve output voltage.

### Background

High voltage direct current (HVDC) power transmission is a cost-effective way of transmitting electrical power over long distances. In HVDC systems alternating current (AC) electrical power is converted to high voltage direct current (HVDC) for transmission over overhead or undersea cables to a destination. At the destination, the HVDC power is converted back to AC power for onward distribution to end-user sites via an electrical distribution network.

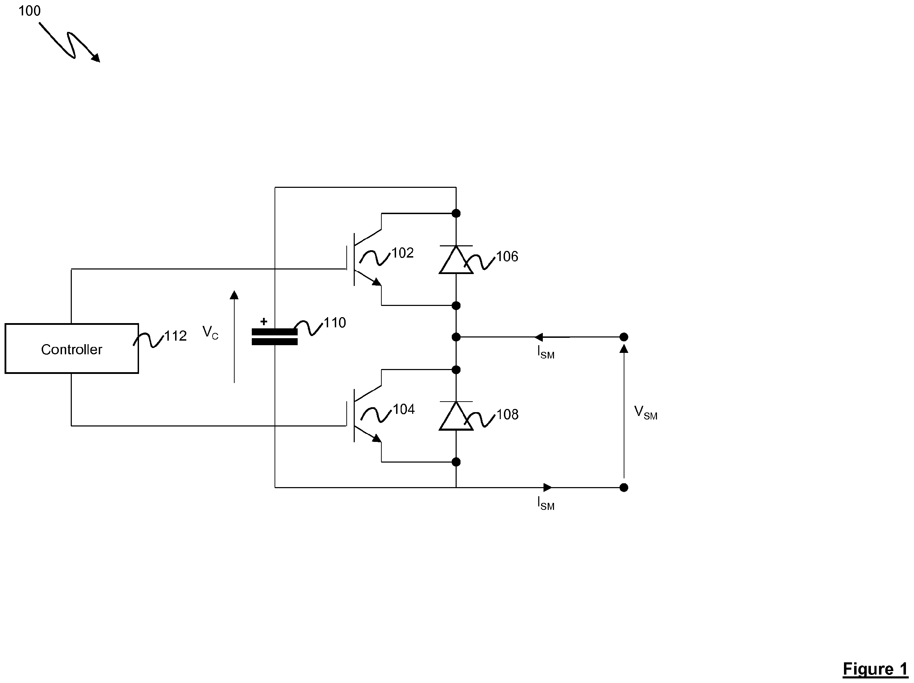

Modular multilevel converters (MMC) are commonly used for the conversion of power between HVDC and AC. MMCs are typically made up of a plurality of submodules, which are typically half-bridge circuits of the kind illustrated in Figure 1, which can be selected or deselected (i.e. inserted or bypassed in the MMC) as required so as to produce a desired MMC output voltage.

A typical submodule is shown generally at 100 in Figure 1. The submodule 100 includes a first switching element, in the form of a first silicon insulated-gate bipolar transistor (IGBT) 102, connected in series with a second switching element, in the form of a second silicon IGBT 104.

A first freewheel diode 106 is connected in an inverse parallel configuration with the first IGBT 102, with its anode connected to an emitter of the first IGBT 102 and its cathode connected to a collector of the first IGBT 102.

A second freewheel diode 108 is connected in an inverse parallel configuration with the second IGBT 104, with its anode connected to an emitter of the second IGBT 104 and its cathode connected to a collector of the second IGBT 104.

The emitter of the first IGBT 102 is connected to the collector of the second IGBT 104. The collector of the first IGBT 102 is connected to a positive terminal of an energy storage element such as a capacitor 110, whilst the emitter of the second IGBT 104 is connected to a negative terminal of the energy storage element 110.

The gates of the first and second IGBTs 102, 104 are connected to outputs of a controller 112, which is configured to generate control signals to switch the first and second IGBTs 102, 104 on and off in a predetermined sequence.

When the first IGBT 102 is switched on and the second IGBT 104 is switched off, the submodule 100 is in an inserted state. A submodule output voltage V_{SM} is equal to a voltage V_{C} across the capacitor 110. The capacitor 110 will charge if the current I_{SM} in the submodule 100 is positive, and will discharge if the current I_{SM} is negative.

When the first IGBT 102 is switched off and the second IGBT 104 is switched on, the submodule is in a bypassed state. The submodule output voltage V_{SM} is zero and the voltage V_{C} across the capacitor 110 remains constant; the capacitor 110 does not charge or discharge.

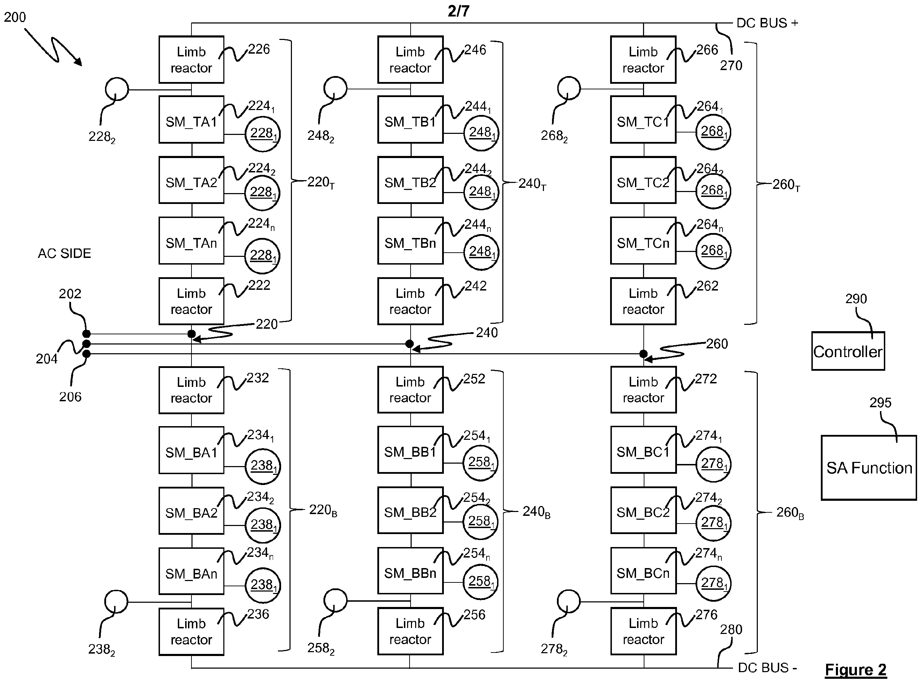

An MMC typically includes a plurality of submodules connected in series on phase-legs of the MMC, as shown generally at 200 in **Figure 2****.** The MMC 200 is coupled to three-phase AC terminals. A first terminal 202 of the three-phase AC terminals is coupled to a first phase-leg 220 which has upper (top) and lower (bottom) arms. A second terminal 204 of the three-phase AC terminals is coupled to a second phase-leg 240, which has upper (top) and lower (bottom) arms. A third terminal 206 of the three-phase AC terminals is coupled to a third phase-leg 260, which also has upper (top) and lower (bottom) arms.

In the example illustrated in Figure 2, the first phase-leg 220 of the MMC 200 includes a top arm 220_{T} having a first limb reactor 222 (e.g. an inductance or a series combination of an inductance and a resistance), a plurality of submodules 224₁ - 224ₙ (labelled in Figure 2 SM_TA₁ - SM_TAₙ, to denote submodules of phase-leg A, top arm) forming a first valve and a second limb reactor 226 (e.g. an inductance or a series combination of an inductance and a resistance) connected in series between a node at a mid-point of the first phase-leg 220 that connects the first phase terminal 202 to the first phase-leg 220 and a positive DC bus 270.

The first phase-leg 220 of the MMC 200 includes a bottom arm 220_{B} having a third limb reactor 232 (e.g. an inductance or a series combination of an inductance and a resistance), a plurality of submodules 234₁ - 234ₙ (labelled in Figure 2 SM_BA₁ - SM_BAₙ, to denote submodules of phase-leg A, bottom arm) forming a second valve and a fourth limb reactor 236 (e.g. an inductance or a series combination of an inductance and a resistance) connected in series between the mid-point node of the first phase-leg 220 and a negative DC bus 280.

Similarly, the second phase-leg 240 of the MMC 200 includes a top arm 240_{T} having a first limb reactor 242 (e.g. an inductance or a series combination of an inductance and a resistance), a plurality of submodules 244₁ - 244ₙ (labelled in Figure 2 SM_TB₁ - SM_TBₙ, to denote submodules of phase-leg B, top arm) forming a third valve and a second limb reactor 246 (e.g. an inductance or a series combination of an inductance and a resistance) connected in series between a node at a mid-point of the second phase-leg 240 that connects the second phase terminal 204 to the second phase-leg 240 and the positive DC bus 270.

The second phase-leg 240 of the MMC 200 includes a bottom arm 240_{B} having a third limb reactor 252 (e.g. an inductance or a series combination of an inductance and a resistance), a plurality of submodules 254₁ - 254ₙ (labelled in Figure 2 SM_BB₁ - SM_BBₙ, to denote submodules of phase-leg B, bottom arm) forming a fourth valve and a fourth limb reactor 256 (e.g. an inductance or a series combination of an inductance and a resistance) connected in series between the mid-point node of the second phase-leg 240 and the negative DC bus 280.

Similarly, the third phase-leg 260 of the MMC 200 includes a top arm 260_{T} having a first limb reactor 262 (e.g. an inductance or a series combination of an inductance and a resistance), a plurality of submodules 264₁ - 264ₙ (labelled in Figure 2 SM_TC₁ - SM_TCₙ, to denote submodules of phase-leg C, top arm) forming a fifth valve and a second limb reactor 266 (e.g. an inductance or a series combination of an inductance and a resistance) connected in series between a node at a mid-point of the third phase-leg 260 that connects the third phase terminal 206 to the second phase-leg 260 and the positive DC bus 270.

The third phase-leg 260 of the MMC 200 includes a bottom arm 260_{B} having a third limb reactor 272 (e.g. an inductance or a series combination of an inductance and a resistance), a plurality of submodules 274₁ - 274ₙ (labelled in Figure 2 SM_BC₁ - SM_BCₙ, to denote submodules of phase-leg C, bottom arm) forming a sixth valve and a fourth limb reactor 276 (e.g. an inductance or a series combination of an inductance and a resistance) connected in series between the mid-point node of the third phase-leg 260 and the negative DC bus 280.

Each valve of the MMC also includes a plurality of first sensors configured to indicate a voltage value for each submodule of the valve and a second sensor configured to indicate a polarity or sign of a current in the valve.

Thus, the first valve includes a plurality of first sensors 228₁ configured to indicate a voltage value for each submodule of the first valve and a second sensor 228₂ configured to indicate a polarity or sign of a current in the first valve. Similarly, the second valve includes a plurality of first sensors 238₁ and a second sensor 238₂, the third valve includes a plurality of first sensors 248₁ and a second sensor 248₂, the fourth valve includes a plurality of first sensors 258₁ and a second sensor 258₂, the fifth valve includes a plurality of first sensors 268₁ and a second sensor 268₂, and the sixth valve includes a plurality of first sensors 278₁ and a second sensor 278₂. It is to be understood that the positioning of the respective first and second sensors in Figure 2 is illustrative only, and that the first and second sensors for each valve can be positioned at any convenient location in the valve that would allow the first and second sensors to fulfil their respective voltage and current sensing functions.

It is to be noted that the positioning of the limb reactors 222, 226, 232, 236, 242, 246, 252, 256, 262, 266, 272, 276 in Figure 2 is merely exemplary. In alternative MMC topologies, a limb reactor for the arm 220_{T} could be provided only between the first terminal 202 and the submodule 224ₙ, or only between the positive DC bus 270 and the submodule 224₁, or could be split between the bottom limb reactor 222 and top limb reactor 226. Limb reactors for the arms 240_{T}, 260_{T} could be similarly positioned, whilst limb reactors for the arms 220_{B}, 240_{B}, 260_{B} may be provided only between the respective terminals 202, 204, 206 and the submodules 234₁, 254₁, 274₁, or only between the negative DC bus 280 and the submodules 234ₙ, 254ₙ, 274ₙ, or split between the top limb reactors 232, 252, 272 and the bottom limb reactors 236, 256, 276.

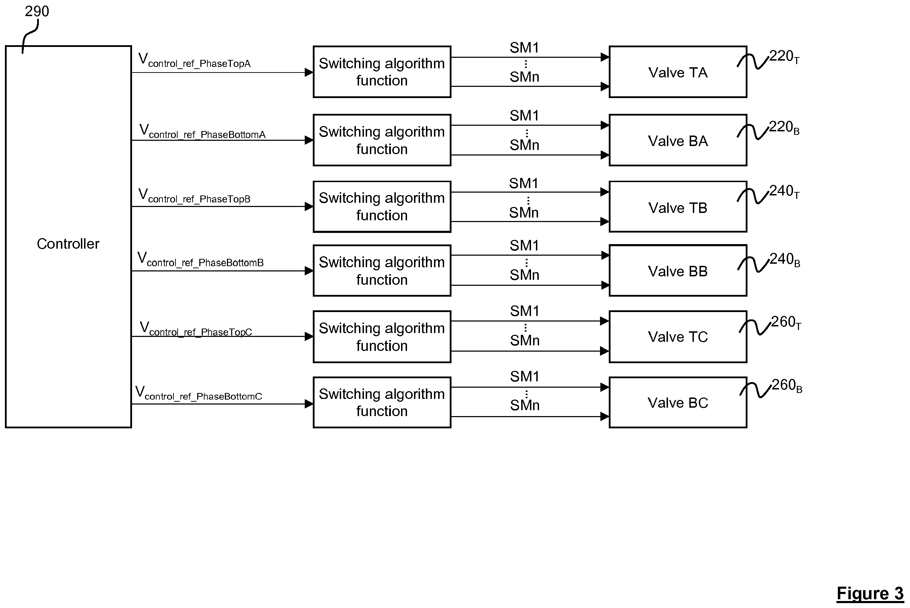

In operation of the MMC 200, a switching algorithm function 295 selectively activates (inserts) the submodules of each valve 220_{T}, 220_{B}, 240_{T}, 240_{B}, 260_{T}, 260_{B} according to a switching algorithm, as illustrated schematically in Figure 3, as a DC voltage is applied across the positive and negative DC bus 270, 280, to selectively charge and discharge the energy storage elements 110 (e.g. capacitors) of each submodule. By controlling the number of submodules that are activated and the timing at which the submodules of each valve 220_{T}, 220_{B}, 240_{T}, 240_{B}, 260_{T}, 260_{B} are activated, a desired output voltage, as defined by a respective control valve voltage reference signal V_{control_ref_PhaseTopA}, V_{control_ref_PhaseBottomA}, V_{control_ref_PhaseTopB}, V_{control_ref_PhaseBottomB}, V_{control_ref_PhaseTopC}, V_{control_ref_PhaseBottomC}, can be produced at each respective valve 220_{T}, 220_{B}, 240_{T}, 240_{B}, 260_{T}, 260_{B}, so as to generate a desired voltage at each of the AC terminals 202, 204, 206.

An important criterion in the selection of an HVDC transmission scheme is losses. Losses in an MMC-based scheme are typically distributed between a transformer on the AC side of the MMC, the MMC itself, and DC lines used to transmit power between stations. Within the MMC itself, approximately 35-40% of the total losses can be attributed to the commutation frequency of the submodules (i.e. the frequency with which the switching elements of the submodules are activated in order to insert or bypass the submodule in the MMC in order to meet a desired MMC output voltage), and 60-65% of the total losses can be attributed to conduction losses in the submodules.

A desire therefore exists to reduce losses in MMC-based HVDC transmission schemes.

The article by D. Rosheila et al: « A Modified Voltage Balancing Algorithm for the Modular Multilevel Converter: Evaluation for Staircase and Phase-Disposition PWM. IEEE Transactions on power electronics, Institute of electrical and electronics engineers, USA, Vol.30, n°8 1st August 2015 (2015-08-01), discloses a low complexity implementation of the voltage balancing algorithm aiming to reduce the switching frequency of the power devices in Modular Multilevel Converters.

The article by Qin Jiangchao et al : « Reduced Switching-Frequency Voltage-Balancing Strategies for Modular Multilevel HVDC Converters »,IEEE Transactions on power delivery, IEE Service center, New York, NY ,US, Vol. 28, no 4 1st October 2013 (2013-10-01), discloses a general framework for the capacitor voltage balancing of a Modular Multilevel Converter.

The article by Antonio-Ferreira Abel et al : « Comparison of cell selection methods for modular multilevel converters », 2016 IEEE 16th International conference on environment and electrical engineering, 7 june 2016 (2016-06-07), analyzes and compares several algorithms of cell selection methods for modular multilevel converters.

### Summary

According to a first aspect, the invention provides a method according to claim 1 for selecting submodules of a valve of modular multilevel converter in order to generate a desired valve output voltage.

The method may further comprise: if the sign of the current in the valve is positive, prior to comparing the obtained voltage value to the first threshold, multiplying the first shift voltage value by a gain value to obtain a modified voltage shift value; and if the sign of the current in the valve is negative, prior to comparing the obtained voltage value to a second threshold, multiplying the first shift voltage value by the gain value to obtain a modified voltage shift value.

If the sign of the current in the valve is positive and the first shift voltage value is below a minimum value threshold, the value of the minimum value threshold may be retained for subsequent use as the first shift voltage value. If the sign of the current in the valve is positive and the first shift voltage value exceeds a maximum value threshold, the value of the maximum value threshold may be retained for subsequent use as the first shift voltage value; if the sign of the current in the valve is negative and the first shift voltage value is below the minimum value threshold, the value of the minimum value threshold may be retained for subsequent use as the first shift voltage value; and if the sign of the current in the valve is negative and the first shift voltage value exceeds the maximum value threshold, the value of the maximum value threshold may be retained for subsequent use as the first shift voltage value.

According to a second aspect, the invention provides a computer program comprising instructions which, when executed by a processing unit, causes the processing unit to perform the method of the first aspect.

According to a third aspect, the invention provides a processing system comprising one or more processing units configured to execute the computer program of the second aspect.

According to a fourth aspect, the invention provides a modular multilevel converter according to claim 6.

Each valve of the modular multilevel converter may comprise a limb reactor.

The limb reactor may comprise an inductance or a series combination of an inductance and a resistance.

### Brief Description of the Drawings

Embodiments of the invention will now be described, strictly by way of example only, with reference to the accompanying drawings, of which:
Figure 1 is a schematic representation of a half-bridge submodule for use in a modular multilevel converter;
Figure 2 is a schematic representation of a modular multilevel converter;
Figure 3 is a schematic diagram illustrating the use of a switching algorithm to control the submodules of a modular multilevel converter to achieve a desired output voltage at each arm of the MMC;
Figure 4 is a diagram illustrating steps in a method which is not covered by the scope of the claims for selecting submodules of a valve of an MMC in order to achieve a desired valve output voltage;
Figure 5 is a diagram illustrating steps in an alternative method which is not covered by the scope of the claims for selecting submodules of a valve of an MMC in order to achieve a desired valve output voltage;
Figure 6 is a diagram illustrating steps in a first method according to the invention for selecting submodules of a valve of an MMC in order to achieve a desired valve output voltage; and
Figure 7 is a diagram illustrating steps in an alternative method according to the invention for selecting submodules of a valve of an MMC in order to achieve a desired valve output voltage.

### Detailed Description

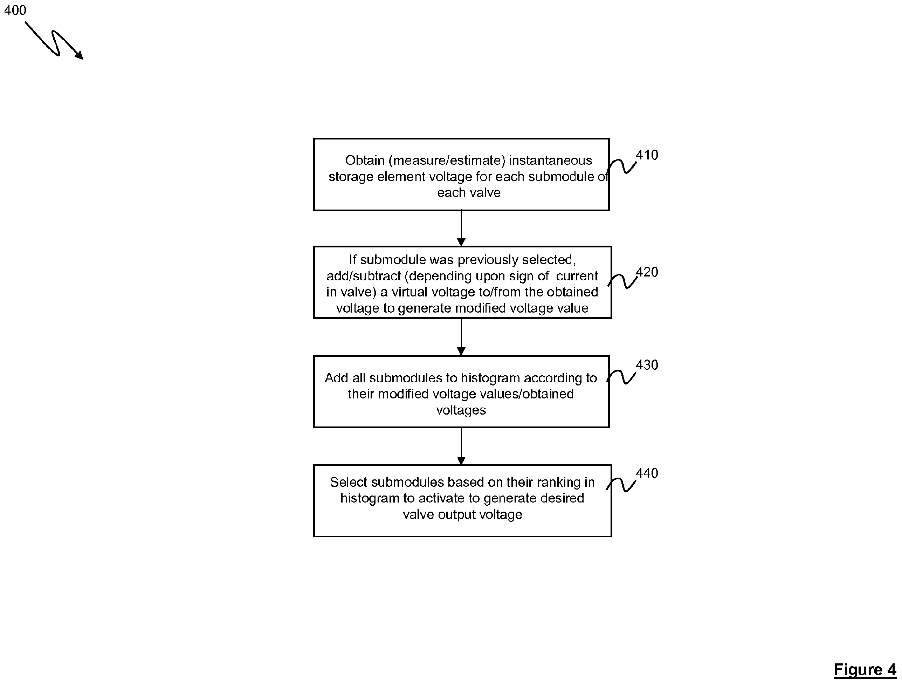

The present disclosure relates to an improved switching algorithm for a modular multilevel converter (MMC) which selectively activates the submodules of the valves of the MMC in order to generate a desired valve output voltage defined by a control valve voltage reference signal, whilst limiting commutation frequency losses in the MMC. Referring now to **Figure 4****,** a method (algorithm) performed by the switching algorithm function 295 for selecting submodules (either no submodules, one submodule, or more than one submodule) of a valve of an arm 220_{T}, 220_{B}, 240_{T}, 240_{B}, 260_{T}, 260_{B} of an MMC 200 to be activated (inserted) in order to generate a desired valve output voltage is shown generally at 400. This method illustrated on figure 4 is not covered by the claims and is for understanding the present invention.

In a first step 410, a voltage value indicative of an instantaneous voltage across a storage element such as a capacitor 110 of each submodule of each valve of arms 220_{T}, 220_{B}, 240_{T}, 240_{B}, 260_{T}, 260_{B} is obtained. The voltage value may be obtained, for example, by measuring or estimating the voltage across the energy storage element 110 at a sample time, using the first sensor of the valve.

A determination is then made for each submodule of each valve, at step 420, as to whether that submodule was previously selected (i.e. selected at a preceding sample time). If the submodule was previously selected then a virtual voltage shift value, which in this example is a predetermined fixed value, is added to or subtracted from the obtained voltage value, depending upon the sign or polarity of instantaneous current flow (at the sample time) in the valve to which the submodule belongs, as explained below, to generate a modified voltage value.

If the submodule was previously selected, and the sign or polarity of instantaneous current flow at the sample time in the valve to which the submodule belongs (as measured, for example, by the second sensor of the valve) is negative, then the virtual shift voltage value is added to the obtained voltage value, such that the modified voltage value is greater than the obtained voltage value.

If the submodule was previously selected, and the sign or polarity of instantaneous current flow at the sample time in the valve to which the submodule belongs (as measured, for example, by the second sensor of the valve) is positive, then the virtual shift voltage value is subtracted from the obtained voltage value, such that the modified voltage value is less than the obtained voltage value.

If the submodule was not previously selected, then no virtual shift voltage value is added to or subtracted from the obtained voltage value.

Once a modified voltage value has been generated for all of the submodules that were previously selected, all of the submodules of each valve are added to a histogram for that valve, at step 430. The position of each submodule in its respective histogram is based on the modified voltage value (where a modified voltage value has been generated) or the obtained voltage value (where no modified voltage value has been generated).

At step 440 the switching algorithm selects none, one or more submodules for each valve based on their rankings in the histogram (from lowest to highest or from highest to lowest) to be activated to generate a desired valve output voltage. The desired valve output voltage at each sample time is provided to the algorithm by the controller 290 as a reference voltage, and the switching algorithm selects none, one or more submodules for each valve at each sample time in order to create a voltage in the valve that is equal to the reference voltage provided by the controller. The submodules are selected in order from lowest to highest or highest to lowest, as a function of the sign of the current through the relevant arm(s).

Thus, for the valve of arm 220_{T}, none, one or more of the submodules 224₁ - 224ₙ are selected, based upon their rankings in the histogram for the valve of arm 220_{T}, to be activated such that the valve output voltage generated by the combination of the selected submodules is equal to the specified valve output voltage V_{control_ref_PhaseTopA}.

Similarly, for the valve of arm 220_{B}, none, one or more of the submodules 234₁ - 234ₙ are selected, based upon their rankings in the histogram for the valve of arm 220_{B}, to be activated such that the valve output voltage generated by the combination of the selected submodules is equal to the specified valve output voltage V_{control_ref_PhaseBottomA}.

Adding the virtual voltage value to, or subtracting the virtual voltage value from, the obtained voltage value for submodules that were selected at the preceding sample time alters the position of those submodules in the histogram (as compared to positioning the submodules in the histogram based upon their obtained voltage values alone) and increases the likelihood that they will be selected again at the current sample time, which reduces the need to insert or bypass submodules by changing the state of their switching elements. Thus, the switching frequency of the submodules in the MMC is reduced, leading to a reduction in switching losses in the MMC.

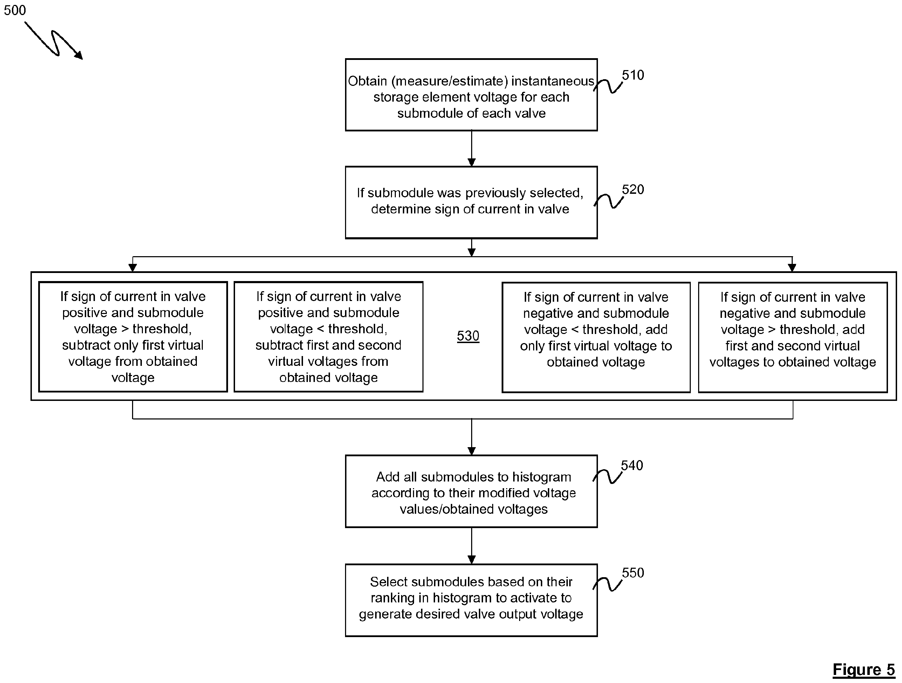

**Figure 5** is a flow diagram illustrating steps in an alternative method 500 (algorithm) for selecting submodules (either no submodules, one submodule, or more than one submodule) of a valve of an arm 220_{T}, 220_{B}, 240_{T}, 240_{B}, 260_{T}, 260_{B} of an MMC 200 to be activated in order to generate a desired valve output voltage. This method illustrated on figure 5 is not covered by the claims and is for understanding the present invention.

In a first step 510, a voltage value indicative of an instantaneous voltage across a storage element such as a capacitor 110 of each submodule of each valve of arms 220_{T}, 220_{B}, 240_{T}, 240_{B}, 260_{T}, 260_{B} is obtained. The voltage value may be obtained, for example, by measuring or estimating the voltage across the energy storage element 110 at a sample time, using the first sensor of the valve.

A determination is then made for each submodule of each valve, at step 520, as to whether that submodule was previously selected (i.e. selected at a preceding sample time). If the submodule was previously selected then the sign or polarity of instantaneous current flow (at the sample time) in the valve to which the submodule belongs (as measured, for example, by the second sensor of the valve) is determined.

At step 530, one or more virtual voltage shift values are added to or subtracted from the obtained voltage value, depending on i) the sign or polarity of the instantaneous current flow (at the sample time) in the valve to which the submodule belongs and ii) the instantaneous voltage across the storage element of the submodule at the sample time.

Thus, if the sign or polarity of instantaneous current flow in the valve at the sample time is positive and the instantaneous voltage across the storage element at the sample time exceeds a predetermined threshold, only a first virtual voltage shift value is subtracted from the obtained submodule voltage to generate a modified voltage value. The first virtual voltage shift value may be a predetermined fixed value.

However, if the sign or polarity of instantaneous current flow in the valve at the sample time is positive and the instantaneous voltage across the storage element at the sample time is below the predetermined threshold, the first virtual shift voltage value and a second virtual voltage shift value, which may be a predetermined fixed value that is equal to the first virtual voltage shift value, are subtracted from the obtained submodule voltage to generate a modified voltage value.

If the sign or polarity of instantaneous current flow in the valve at the sample time is negative and the instantaneous voltage across the storage element at the sample time falls below a predetermined threshold, only a first virtual voltage shift value is added to the obtained submodule voltage to generate a modified voltage value. The first virtual voltage shift value may be a predetermined fixed value.

If the sign or polarity of instantaneous current flow in the valve at the sample time is negative and the instantaneous voltage across the storage element at the sample time exceeds the predetermined threshold, the first virtual voltage shift value and a second virtual voltage shift value, which may be a predetermined fixed value that is equal to the first virtual voltage shift value, are added to the obtained submodule voltage to generate a modified voltage value.

If the submodule was not previously selected, then no virtual voltage value is added to or subtracted from the obtained voltage value.

Once a modified voltage value has been generated for all of the submodules that were previously selected, all of the submodules of each valve are added to a histogram for that valve, at step 540. The position of each submodule in its respective histogram is based on the modified voltage value (where a modified voltage value has been generated) or the obtained voltage value (where no modified voltage value has been generated).

At step 550 the switching algorithm selects none, one or more submodules for each valve based on their rankings in the histogram (from lowest to highest or from highest to lowest) to be activated to generate a desired valve output voltage.

Thus, for the valve of arm 220_{T}, none, one or more of the submodules 224₁ - 224ₙ are selected, based upon their rankings in the histogram for the valve of arm 220_{T}, to be activated such that the valve output voltage generated by the combination of the selected submodules is equal to the specified valve output voltage V_{control_ref_PhaseTopA}.

Similarly, for the valve of arm 220_{B}, none, one or more of the submodules 234₁ - 234ₙ are selected, based upon their rankings in the histogram for the valve of arm 220_{B}, to be activated such that the valve output voltage generated by the combination of the selected submodules is equal to the specified valve output voltage V_{control_ref_PhaseBottomA}.

As in the method discussed above in relation to Figure 4, adding the first virtual shift voltage value to, or subtracting the first virtual shift voltage value from, the obtained voltage value for submodules that were selected at the preceding sample time alters the position of those submodules in the histogram (as compared to positioning the submodules in the histogram based upon their obtained voltage values alone) and increases the likelihood that they will be selected again at the current sample time, which reduces the need to insert or bypass submodules by changing the state of their switching elements. Thus, the switching frequency of the submodules in the MMC is reduced, leading to a reduction in switching losses in the MMC.

Additionally, adding the second virtual voltage shift value to, or subtracting the second virtual voltage shift value from, the obtained voltage value increases the voltage band of the submodules, thereby further reducing the need for submodules to be inserted or bypassed in the MMC and thus further reducing the average commutation frequency of the submodules and associated switching losses in the MMC.

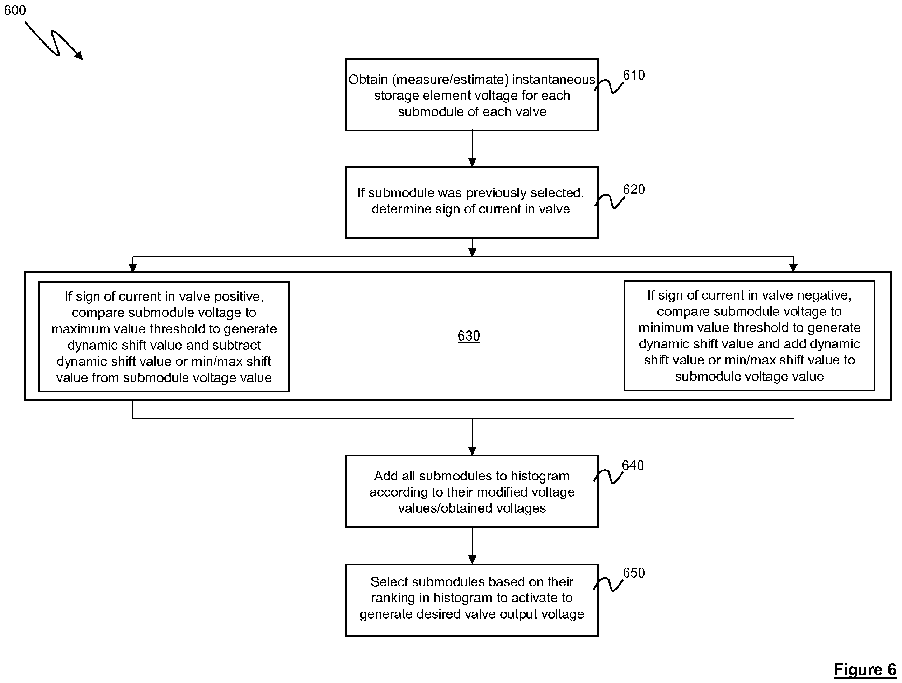

Referring now to **Figure 6****,** an embodiment of a method (algorithm) according to the invention for selecting submodules (either no submodules, one submodule, or more than one submodule) of a valve of an arm 220T, 220B, 240T, 240B, 260T, 260B of an MMC 200 to be activated in order to generate a desired valve output voltage, is shown generally at 600.

In a first step 610, a voltage value indicative of an instantaneous voltage across a storage element such as a capacitor 110 of each submodule of each valve of arms 220_{T}, 220_{B}, 240_{T}, 240_{B}, 260_{T}, 260_{B} is obtained. The voltage value may be obtained, for example, by measuring or estimating the voltage across the energy storage element 110 at a sample time, using the first sensor of the valve.

A determination is then made for each submodule of each valve, at step 620, as to whether that submodule was previously selected (i.e. selected at a preceding sample time). If the submodule was previously selected then the sign or polarity of instantaneous current flow (at the sample time) in the valve to which the submodule belongs (as measured, for example, by the second sensor of the valve) is determined.

At step 630, a dynamic voltage shift value is generated based on i) the polarity or sign of instantaneous current flow in the valve to which the submodule belongs and ii) a threshold representing either a minimum or a maximum voltage across the storage element 110 of the submodule, depending upon the sign or polarity of instantaneous current flow in the valve.

Thus, if the sign or polarity of instantaneous current flow in the valve at the sample time is positive, the instantaneous voltage across the storage element 110 of the submodule at the sample time is compared to a maximum voltage threshold representing a maximum voltage value across the storage element 110 of the submodule. A dynamic voltage shift value is obtained by calculating the difference between the maximum voltage threshold and the instantaneous voltage across the storage element 110 of the submodule at the sample time. If this dynamic voltage shift value is below a predefined maximum voltage shift value and above a predefined minimum voltage shift value, then the dynamic voltage shift value is subtracted from the obtained voltage value for the submodule to generate a modified voltage value for the submodule. If the dynamic shift value is below the predefined minimum voltage shift value, then the predefined minimum voltage shift value is subtracted from the obtained voltage value to generate the modified voltage value for the submodule. If the dynamic shift value meets or exceeds the predefined maximum voltage shift value, then the predefined maximum voltage shift value is subtracted from the obtained voltage value to generate the modified voltage value for the submodule.

If the sign or polarity of instantaneous current flow in the valve at the sample time is negative, the instantaneous voltage across the storage element 110 of the submodule at the sample time is compared to a minimum voltage threshold representing a minimum voltage value across the storage element 110 of the submodule. A dynamic voltage shift value is obtained by calculating the difference between the instantaneous voltage across the submodule at the sample time and the minimum voltage threshold. If this dynamic voltage shift value is below the predefined maximum voltage shift value and above the predefined minimum voltage shift value, then the dynamic voltage shift value is added to the obtained voltage value for the submodule to generate a modified voltage value for the submodule. If the dynamic shift value is below the predefined minimum voltage shift value, then the predefined minimum voltage shift value is added to the obtained voltage value to generate the modified voltage value for the submodule. If the dynamic shift value meets or exceeds the predefined maximum voltage shift value, then the predefined maximum voltage shift value is added to the obtained voltage value to generate the modified voltage value for the submodule.

Once a modified voltage value has been generated for all of the submodules that were previously selected, all of the submodules of each valve are added to a histogram for that valve, at step 640. The position of each submodule in its respective histogram is based on the modified voltage value (where a modified voltage value has been generated) or the obtained voltage value (where no modified voltage value has been generated).

At step 650 the switching algorithm selects none, one or more submodules for each valve based on their rankings in the histogram (from lowest to highest or from highest to lowest) to be activated to generate a desired valve output voltage.

Thus, for the valve of arm 220_{T}, none, one or more of the submodules 224₁ - 224ₙ are selected, based upon their rankings in the histogram for the valve of arm 220_{T}, to be activated such that the valve output voltage generated by the combination of the selected submodules is equal to the specified valve output voltage V_{control_ref_PhaseTopA}.

Similarly, for the valve of arm 220_{B}, none, one or more of the submodules 234₁ - 234ₙ are selected, based upon their rankings in the histogram for valve 220_{B}, to be activated such that the valve output voltage generated by the combination of the selected submodules is equal to the specified valve output voltage V_{control_ref_PhaseBottomA}.

As in the previous examples, adding the shift voltage value to, or subtracting the shift voltage value from, the obtained voltage value for submodules that were selected at the preceding sample time alters the position of those submodules in the histogram (as compared to positioning the submodules in the histogram based upon their obtained voltage values alone) and increases the likelihood that they will be selected again at the current sample time, which reduces the need to insert or bypass submodules by changing the state of their switching elements. Thus, the switching frequency of the submodules in the MMC is reduced, leading to a reduction in switching losses in the MMC. Further, the use of upper and lower value thresholds imposes a limit on the commutation frequency of the submodules, thereby limiting switching losses.

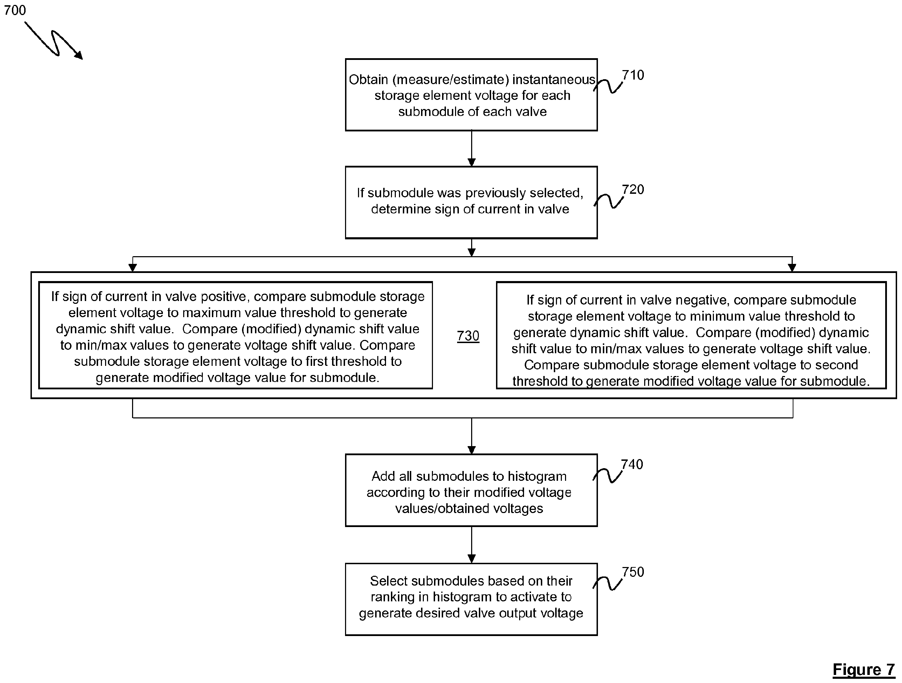

Referring now to **Figure 7****,** a further embodiment of a method (algorithm) according to the invention, for selecting submodules (either no submodules, one submodule, or more than one submodule) of a valve of an arm 220_{T}, 220_{B}, 240_{T}, 240_{B}, 260_{T}, 260_{B} of an MMC 200 to be activated in order to generate a desired valve output voltage, is shown generally at 700. The method 700 combines features of the methods 500, 600 discussed above with reference to Figures 5 and 6.

In a first step 710, a voltage value indicative of an instantaneous voltage across a storage element such as a capacitor 110 of each submodule of each valve of arms 220_{T}, 220_{B}, 240_{T}, 240_{B}, 260_{T}, 260_{B} is obtained. The voltage value may be obtained, for example, by measuring or estimating the voltage across the energy storage element 110 at a sample time, using the first sensor of the valve.

A determination is then made for each submodule of each valve, at step 720, as to whether that submodule was previously selected (i.e. selected at a preceding sample time). If the submodule was previously selected then the sign or polarity of instantaneous current flow (at the sample time) in the valve to which the submodule belongs (as measured, for example, by the second sensor of the valve) is determined.

At step 730, a dynamic voltage shift value is generated based on i) the polarity or sign of instantaneous current flow in the valve to which the submodule belongs and ii) a threshold representing the minimum or maximum voltage across the storage element 110 of the submodule.

Thus, if the sign or polarity of instantaneous current flow in the valve at the sample time is positive, the instantaneous voltage across the storage element 110 of the submodule at the sample time is compared to a maximum voltage threshold representing a maximum voltage value across the storage element 110 of the submodule. A dynamic voltage shift value is obtained by calculating the difference between the maximum voltage threshold and the instantaneous voltage across the storage element 110 of the submodule at the sample time. The dynamic voltage shift value may be multiplied by a gain value to obtain a modified voltage shift value.

If the (modified) dynamic voltage shift value is below a predefined maximum voltage shift value and above a predefined minimum voltage shift value, then the modified dynamic voltage shift value is retained as a voltage shift value for subsequent use. If the modified dynamic shift value is below a predefined minimum voltage shift value, then the predefined minimum voltage shift value is retained as the voltage shift value for subsequent use. If the modified dynamic shift value meets or exceeds the predefined maximum voltage shift value, then the predefined maximum voltage shift value is retained as the voltage shift value for subsequent use.

The instantaneous voltage across the storage element 110 at the sample time is then compared to a first threshold. If the instantaneous voltage across the storage element 110 at the sample time is less than the first threshold, then the voltage shift value is multiplied by a first gain value, and the result of this multiplication is subtracted from the obtained voltage value to generate a modified voltage value for the submodule. If the instantaneous voltage across the storage element 110 at the sample time is greater than the first threshold, then the voltage shift value is multiplied by a second gain value, which is a multiple of the first value, and the result of this multiplication is subtracted from the obtained voltage value to generate the modified voltage value for the submodule.

If the sign or polarity of instantaneous current flow in the valve at the sample time is negative, the instantaneous voltage across the storage element 110 of the submodule at the sample time is compared to a minimum voltage threshold representing a minimum voltage value across the storage element 110 of the submodule. A dynamic voltage shift value is obtained by calculating the difference between the instantaneous voltage across the storage element 110 of the submodule at the sample time and the minimum voltage threshold and. The dynamic voltage shift value may be multiplied a gain value to obtain a modified voltage shift value.

If the (modified) dynamic voltage shift value is below a predefined maximum voltage shift value and above a predefined minimum voltage shift value, then the modified dynamic voltage shift value is retained as a voltage shift value for subsequent use. If the modified dynamic shift value is below a predefined minimum voltage shift value, then the predefined minimum voltage shift value is retained as the voltage shift value for subsequent use. If the modified dynamic shift value meets or exceeds the predefined maximum voltage shift value, then the predefined maximum voltage shift value is retained as the voltage shift value for subsequent use.

The instantaneous voltage across the storage element 110 at the sample time is then compared to a second threshold. If the instantaneous voltage across the storage element 110 at the sample time is greater than the second threshold, then the voltage shift value is multiplied by a third gain value, and the result of this multiplication is added to the obtained voltage value to generate a modified voltage value for the submodule. If the instantaneous voltage across the storage element 110 at the sample time is less than the second threshold, then the voltage shift value is multiplied by a fourth gain value, which is a multiple of the third gain value, and the result of this multiplication is added to the obtained voltage value to generate the modified voltage value for the submodule.

Once a modified voltage value has been generated for all of the submodules that were previously selected, all of the submodules of each valve are added to a histogram for that valve, at step 740. The position of each submodule in its respective histogram is based on the modified voltage value (where a modified voltage value has been generated) or the obtained voltage value (where no modified voltage value has been generated).

At step 750 the switching algorithm selects none, one or more submodules for each valve based on their rankings in the histogram (from lowest to highest or from highest to lowest) to be activated to generate a desired valve output voltage.

Thus, for the valve of arm 220_{T}, none, one or more of the submodules 224₁ - 224ₙ are selected, based upon their rankings in the histogram for the valve of arm 220_{T}, to be activated such that the valve output voltage generated by the combination of the selected submodules is equal to the specified valve output voltage V_{control_ref_PhaseTopA}.

Similarly, for the valve of arm 220_{B}, none, one or more of the submodules 234₁ - 234ₙ are selected, based upon their rankings in the histogram for valve 220_{B}, to be activated such that the valve output voltage generated by the combination of the selected submodules is equal to the specified valve output voltage V_{control_ref_PhaseBottomA}.

As in the previous examples, adding the shift voltage value to, or subtracting the shift virtual voltage value from, the obtained voltage value for submodules that were selected at the preceding sample time alters the position of those submodules in the histogram (as compared to positioning the submodules in the histogram based upon their obtained voltage values alone) and increases the likelihood that they will be selected again at the current sample time, which reduces the need to switch submodules in and out and thus reduces the average commutation frequency of the submodules and therefore reduces switching losses in the MMC.

As will be appreciated from the foregoing, the methods described above reduce switching losses arising in a MMC due to insertion and bypassing of submodules, as the likelihood that a submodule that was previously selected will be selected again, thus reducing the need to insert and bypass submodules by adjusting the state of their switching elements. Thus, the average commutation frequency of the submodules of the MMC can be reduced, reducing losses.

The switching algorithm and the switching algorithm function 295 may be implemented in hardware, or may be implemented in one or more processing units, e.g. computers, executing instructions to perform the methods described above. The instructions may be stored on any convenient computer readable storage medium such as static or dynamic memory, hard disc, CD-ROM, DVD-ROM or the like.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality. Any reference signs in the claims shall not be construed so as to limit their scope.

## Claims

1. A method for selecting submodules of a valve of modular multilevel converter in order to generate a desired valve output voltage, the method comprising:
obtaining a voltage value for each submodule of the valve indicative of a voltage across an energy storage element of the submodule;
for each submodule of the valve:
i) if the submodule was previously selected:
if the sign of said current in the valve is positive, a first shift voltage value, which is a dynamic shift value, is obtained by calculating the difference between a maximum voltage threshold and the obtained voltage value for the submodule;
if the sign of the current in the valve is negative, the first shift voltage value, which is a dynamic shift value, is obtained by calculating the difference between the obtained voltage value for the submodule and a minimum voltage threshold;
according to a first OR-alternative:
if the sign of said current in the valve is positive:
if the dynamic shift value is below a predefined maximum voltage shift value and above a predefined minimum voltage shift value, the dynamic shift value is subtracted from the obtained voltage value for the submodule to generate the modified voltage value for the submodule;
if the dynamic shift value is below the predefined minimum voltage shift value, the predefined minimum voltage shift value is subtracted from the obtained voltage value to generate the modified voltage value for the submodule;
if the dynamic shift value meets or exceeds the predefined maximum voltage shift value,
the predefined maximum voltage shift value is subtracted from the obtained voltage value to generate the modified voltage value for the submodule;
if the sign of the current in the valve is negative:
if the dynamic shift value is below the predefined maximum voltage shift value and above the predefined minimum voltage shift value, the dynamic shift value is added to the obtained voltage value for the submodule to generate the modified voltage value for the submodule;
if the dynamic shift value is below the predefined minimum voltage shift value, the predefined minimum voltage shift threshold is added to the obtained voltage value to generate the modified voltage value for the submodule;
if the dynamic shift value exceeds the predefined maximum voltage shift value, the predefined maximum voltage shift value is added to the obtained voltage value to generate the modified voltage value for the submodule;
OR according to a second OR-alternative:
if the sign of the current in the valve is positive, comparing the obtained voltage value to a first threshold and:
if the obtained voltage value is less than a first threshold, multiplying the first shift voltage value by a first gain value and subtracting the result of the multiplication from the obtained voltage value to generate the modified voltage value;
if the obtained voltage value is greater than the first threshold, multiplying the first shift voltage value by a second gain value, which is a multiple of the first gain value, and subtracting the result of the multiplication from the obtained voltage value to generate the modified voltage value;
if the sign of the current in the valve is negative, comparing the obtained voltage value to a second threshold and:
if the obtained voltage value is greater than the second threshold, multiplying the first shift voltage value by a third gain value and adding the result of the multiplication to the obtained voltage value to generate the modified voltage value;
if the obtained voltage value is less than the second threshold, multiplying the first shift voltage value by a fourth gain value, which is a multiple of the third gain value, and adding the result of the multiplication to the obtained voltage value to generate the modified voltage value; and
adding the submodule to a histogram according to the modified voltage value for the submodule;
ii) if the submodule was not previously selected:
adding the submodule to a histogram according to the voltage value for the submodule; and
iii) selecting no submodules, one submodule or more than one submodule, based on their ranking in the histogram, to activate so as to generate the desired valve output voltage.

2. A method according to claim 1, the second OR-alternative of said method further comprising:
if the sign of the current in the valve is positive, prior to comparing the obtained voltage value to the first threshold, multiplying the first shift voltage value by a gain value to obtain a modified voltage shift value; and
if the sign of the current in the valve is negative, prior to comparing the obtained voltage value to a second threshold, multiplying the first shift voltage value by the gain value to obtain a modified voltage shift value.

3. A method according to claim 1 or claim 2, wherein the second OR-alternative of claim 1 further comprises:
if the sign of the current in the valve is positive and the first shift voltage value is below a minimum value threshold, retaining the value of the minimum value threshold for subsequent use as the first shift voltage value;
if the sign of the current in the valve is positive and the first shift voltage value exceeds a maximum value threshold, retaining the value of the maximum value threshold for subsequent use as the first shift voltage value;
if the sign of the current in the valve is negative and the first shift voltage value is below the minimum value threshold, retaining the value of the minimum value threshold for subsequent use as the first shift voltage value; and
if the sign of the current in the valve is negative and the first shift voltage value exceeds the maximum value threshold, retaining the value of the maximum value threshold for subsequent use as the first shift voltage value.

4. A computer program comprising instructions which, when executed by a processing unit, causes the processing unit to perform the method of any one of the preceding claims.

5. A processing system comprising one or more processing units configured to execute the computer program of claim 4.

6. A modular multilevel converter comprising:
a plurality of valves, wherein each valve comprises:
a plurality of submodules;
a first sensor configured to indicate a voltage value for each submodule of the valve;
a second sensor configured to indicate a polarity or sign of a current in the valve;
and
a control unit configured to select submodules of the valve of the modular multilevel converter in order to generate a desired valve output voltage,
**characterised in that** said control unit is configured, upon receipt of indications from said first sensor and said second sensor, to:
for each submodule of the valve:
i) if the submodule was previously selected:
if the sign of said current in the valve is positive, a first shift voltage value, which is a dynamic shift value, is obtained by calculating the difference between a maximum voltage threshold and the obtained voltage value for the submodule;
if the sign of the current in the valve is negative, the first shift voltage value, which is a dynamic shift value, is obtained by calculating the difference between the obtained voltage value for the submodule and a minimum voltage threshold;
according to a first OR-alternative:
if the sign of said current in the valve is positive:if the dynamic shift value is below a predefined maximum voltage shift value and above a predefined minimum voltage shift value, the dynamic shift value is subtracted from the obtained voltage value for the submodule to generate the modified voltage value for the submodule;
if the dynamic shift value is below the predefined minimum voltage shift value, the predefined minimum voltage shift value is subtracted from the obtained voltage value to generate the modified voltage value for the submodule;
if the dynamic shift value meets or exceeds the predefined maximum voltage shift value, the predefined maximum voltage shift value is subtracted from the obtained voltage value to generate the modified voltage value for the submodule;
if the sign of the current in the valve is negative:
if the dynamic shift value is below the predefined maximum voltage shift value and above the predefined minimum voltage shift value, the dynamic shift value is added to the obtained voltage value for the submodule to generate the modified voltage value for the submodule;
if the dynamic shift value is below the predefined minimum voltage shift value, the predefined minimum voltage shift threshold is added to the obtained voltage value to generate the modified voltage value for the submodule;
if the dynamic shift value exceeds the predefined maximum voltage shift value, the predefined maximum voltage shift value is added to the obtained voltage value to generate the modified voltage value for the submodule;
OR according to a second OR-alternative:
if the sign of the current in the valve is positive, comparing the obtained voltage value to a first threshold and:
if the obtained voltage value is less than a first threshold, multiplying the first shift voltage value by a first gain value and subtracting the result of the multiplication from the obtained voltage value to generate the modified voltage value;
if the obtained voltage value is greater than the first threshold, multiplying the first shift voltage value by a second gain value, which is a multiple of the first gain value, and subtracting the result of the multiplication from the obtained voltage value to generate the modified voltage value;
if the sign of the current in the valve is negative, comparing the obtained voltage value to a second threshold and:
if the obtained voltage value is greater than the second threshold, multiplying the first shift voltage value by a third gain value and adding the result of the multiplication to the obtained voltage value to generate the modified voltage value;
if the obtained voltage value is less than the second threshold, multiplying the first shift voltage value by a fourth gain value, which is a multiple of the third gain value, and adding the result of the multiplication to the obtained voltage value to generate the modified voltage value;
ii) if the submodule was not previously selected:
add the submodule to a histogram according to the voltage value for the submodule;
and
iii) select no submodules, one submodule or more than one submodule, based on their ranking in the histogram, to activate so as to generate the desired valve output voltage.

7. A modular multilevel converter according to claim 6 wherein each valve further comprises a limb reactor.

8. A modular multilevel converter according to claim 7 wherein the limb reactor comprises an inductance or a series combination of an inductance and a resistance.

## Patentansprüche

1. Verfahren zum Auswählen von Submodulen eines Ventils eines modularen mehrstufigen Wandlers, um eine gewünschte Ventilausgangsspannung zu erzeugen, wobei das Verfahren umfasst:
Erhalten eines Spannungswerts für jedes Submodul des Ventils, der eine Spannung über ein Energiespeicherelement des Submoduls angibt;
für jedes Submodul des Ventils:
i) falls das Submodul zuvor ausgewählt wurde:
falls das Vorzeichen des Stroms im Ventil positiv ist, wird ein erster Verschiebungsspannungswert, der ein dynamischer Verschiebungswert ist, durch Berechnen der Differenz zwischen einer Höchstspannungsschwelle und dem erhaltenen Spannungswert für das Submodul erhalten;
falls das Vorzeichen des Stroms im Ventil negativ ist, wird der erste Verschiebungsspannungswert, der ein dynamischer Verschiebungswert ist, durch Berechnen der Differenz zwischen dem erhaltenen Spannungswert für das Submodul und einer Mindestspannungsschwelle erhalten;
gemäß einer ersten ODER-Alternative:
falls das Vorzeichen des Stroms im Ventil positiv ist:
falls der dynamische Verschiebungswert unter einem vorab definierten Höchstspannungsverschiebungswert und über einem vorab definierten Mindestspannungsverschiebungswert liegt, wird der dynamische Verschiebungswert von dem erhaltenen Spannungswert für das Submodul subtrahiert, um den modifizierten Spannungswert für das Submodul zu erzeugen;
falls der dynamische Verschiebungswert unter dem vorab definierten Mindestspannungsverschiebungswert liegt, wird der vorab definierte Mindestspannungsverschiebungswert von dem erhaltenen Spannungswert subtrahiert, um den modifizierten Spannungswert für das Submodul zu erzeugen;
falls der dynamische Verschiebungswert den vorab definierten Höchstspannungsverschiebungswert trifft oder überschreitet, wird der vorab definierte Höchstspannungsverschiebungswert von dem erhaltenen Spannungswert subtrahiert, um den modifizierten Spannungswert für das Submodul zu erzeugen;
falls das Vorzeichen des Stroms im Ventil negativ ist:
falls der dynamische Verschiebungswert unter dem vorab definierten Höchstspannungsverschiebungswert und über dem vorab definierten Mindestspannungsverschiebungswert liegt, wird der dynamische Verschiebungswert zu dem erhaltenen Spannungswert für das Submodul addiert, um den modifizierten Spannungswert für das Submodul zu erzeugen;
falls der dynamische Verschiebungswert unter dem vorab definierten Mindestspannungsverschiebungswert liegt, wird die vorab definierte Mindestspannungsverschiebungsschwelle zu dem erhaltenen Spannungswert addiert, um den modifizierten Spannungswert für das Submodul zu erzeugen;
falls der dynamische Verschiebungswert den vorab definierten Höchstspannungsverschiebungswert überschreitet, wird der vorab definierte Höchstspannungsverschiebungswert zu dem erhaltenen Spannungswert addiert, um den modifizierten Spannungswert für das Submodul zu erzeugen;
ODER gemäß einer zweiten ODER-Alternative:
falls das Vorzeichen des Stroms im Ventil positiv ist, Vergleichen des erhaltenen Spannungswerts mit einer ersten Schwelle und:
falls der erhaltene Spannungswert kleiner als eine erste Schwelle ist, Multiplizieren des ersten Verschiebungsspannungswerts mit einem ersten Verstärkungswert und Subtrahieren des Ergebnisses der Multiplikation von dem erhaltenen Spannungswert, um den modifizierten Spannungswert zu erzeugen;
falls der erhaltene Spannungswert größer als die erste Schwelle ist, Multiplizieren des ersten Verschiebungsspannungswerts mit einem zweiten Verstärkungswert, der ein Vielfaches des ersten Verstärkungswerts ist, und Subtrahieren des Ergebnisses der Multiplikation von dem erhaltenen Spannungswert, um den modifizierten Spannungswert zu erzeugen;
falls das Vorzeichen des Stroms im Ventil negativ ist, Vergleichen des erhaltenen Spannungswerts mit einer zweiten Schwelle und:
falls der erhaltene Spannungswert größer als die zweite Schwelle ist, Multiplizieren des ersten Verschiebungsspannungswerts mit einem dritten Verstärkungswert und Addieren des Ergebnisses der Multiplikation zu dem erhaltenen Spannungswert, um den modifizierten Spannungswert zu erzeugen;
falls der erhaltene Spannungswert kleiner als die zweite Schwelle ist, Multiplizieren des ersten Verschiebungsspannungswerts mit einem vierten Verstärkungswert, der ein Vielfaches des dritten Verstärkungswerts ist, und Addieren des Ergebnisses der Multiplikation zu dem erhaltenen Spannungswert, um den modifizierten Spannungswert zu erzeugen; und
Addieren des Submoduls zu einem Histogramm gemäß dem modifizierten Spannungswert für das Submodul;
ii) falls das Submodul nicht zuvor ausgewählt wurde:
Addieren des Submoduls zu einem Histogramm gemäß dem Spannungswert für das Submodul;
und
iii) Auswählen keiner Submodule, eines Submoduls oder mehr als eines Submoduls basierend auf deren Platzierung in dem Histogramm, das/die zu aktivieren ist/sind, um die gewünschte Ventilausgangsspannung zu erzeugen.

2. Verfahren nach Anspruch 1,
wobei die zweite ODER-Alternative des Verfahrens weiter umfasst:
falls das Vorzeichen des Stroms im Ventil positiv ist, vor Vergleichen des erhaltenen Spannungswerts mit der ersten Schwelle, Multiplizieren des ersten Verschiebungsspannungswerts mit einem Verstärkungswert, um einen modifizierten Spannungsverschiebungswert zu erhalten; und
falls das Vorzeichen des Stroms im Ventil negativ ist, vor Vergleichen des erhaltenen Spannungswerts mit einer zweiten Schwelle, Multiplizieren des ersten Verschiebungsspannungswerts mit dem Verstärkungswert, um einen modifizierten Spannungsverschiebungswert zu erhalten.

3. Verfahren nach Anspruch 1 oder Anspruch 2, wobei die zweite ODER-Alternative von Anspruch 1 weiter umfasst:
falls das Vorzeichen des Stroms im Ventil positiv ist und der erste Verschiebungsspannungswert unter einer Mindestwertschwelle liegt, Beibehalten des Werts der Mindestwertschwelle für eine nachfolgende Verwendung als den ersten Verschiebungsspannungswert;
falls das Vorzeichen des Stroms im Ventil positiv ist und der erste Verschiebungsspannungswert eine Höchstwertschwelle überschreitet, Beibehalten des Werts der Höchstwertschwelle für eine nachfolgende Verwendung als den ersten Verschiebungsspannungswert;
falls das Vorzeichen des Stroms im Ventil negativ ist und der erste Verschiebungsspannungswert unter der Mindestwertschwelle liegt, Beibehalten des Werts der Mindestwertschwelle für eine nachfolgende Verwendung als den ersten Verschiebungsspannungswert; und
falls das Vorzeichen des Stroms im Ventil negativ ist und der erste Verschiebungsspannungswert die Höchstwertschwelle überschreitet, Beibehalten des Werts der Höchstwertschwelle für eine nachfolgende Verwendung als den ersten Verschiebungsspannungswert.

4. Computerprogramm, umfassend Anweisungen, die, wenn sie von einer Verarbeitungseinheit ausgeführt werden, bewirken, dass die Verarbeitungseinheit das Verfahren nach einem der vorstehenden Ansprüche durchführt.

5. Verarbeitungssystem, umfassend eine oder mehrere Verarbeitungseinheiten, die konfiguriert sind, um das Computerprogramm nach Anspruch 4 auszuführen.

6. Modularer mehrstufiger Wandler, umfassend:
eine Vielzahl von Ventilen, wobei jedes Ventil umfasst:
eine Vielzahl von Submodulen;
einen ersten Sensor, der konfiguriert ist, um einen Spannungswert für jedes Submodul des Ventils anzugeben;
einen zweiten Sensor, der konfiguriert ist, um eine Polarität oder ein Vorzeichen eines Stroms im Ventil anzugeben;
und
eine Steuereinheit, die konfiguriert ist, um Submodule des Ventils des modularen mehrstufigen Wandlers auszuwählen, um eine gewünschte Ventilausgangsspannung zu erzeugen,
**dadurch gekennzeichnet, dass** die Steuereinheit bei Empfang von Angaben von dem ersten Sensor und dem zweiten Sensor für Folgendes konfiguriert ist:
für jedes Submodul des Ventils:
i) falls das Submodul zuvor ausgewählt wurde:
falls das Vorzeichen des Stroms im Ventil positiv ist, wird ein erster Verschiebungsspannungswert, der ein dynamischer Verschiebungswert ist, durch Berechnen der Differenz zwischen einer Höchstspannungsschwelle und dem erhaltenen Spannungswert für das Submodul erhalten;
falls das Vorzeichen des Stroms im Ventil negativ ist, wird der erste Verschiebungsspannungswert, der ein dynamischer Verschiebungswert ist, durch Berechnen der Differenz zwischen dem erhaltenen Spannungswert für das Submodul und einer Mindestspannungsschwelle erhalten;
gemäß einer ersten ODER-Alternative:
falls das Vorzeichen des Stroms im Ventil positiv ist: falls der dynamische Verschiebungswert unter einem vorab definierten Höchstspannungsverschiebungswert und über einem vorab definierten Mindestspannungsverschiebungswert liegt, wird der dynamische Verschiebungswert von dem erhaltenen Spannungswert für das Submodul subtrahiert, um den modifizierten Spannungswert für das Submodul zu erzeugen;
falls der dynamische Verschiebungswert unter dem vorab definierten Mindestspannungsverschiebungswert liegt, wird der vorab definierte Mindestspannungsverschiebungswert von dem erhaltenen Spannungswert subtrahiert, um den modifizierten Spannungswert für das Submodul zu erzeugen;
falls der dynamische Verschiebungswert den vorab definierten Höchstspannungsverschiebungswert trifft oder überschreitet, wird der vorab definierte Höchstspannungsverschiebungswert von dem erhaltenen Spannungswert subtrahiert, um den modifizierten Spannungswert für das Submodul zu erzeugen;
falls das Vorzeichen des Stroms im Ventil negativ ist:
falls der dynamische Verschiebungswert unter dem vorab definierten Höchstspannungsverschiebungswert und über dem vorab definierten Mindestspannungsverschiebungswert liegt, wird der dynamische Verschiebungswert zu dem erhaltenen Spannungswert für das Submodul addiert, um den modifizierten Spannungswert für das Submodul zu erzeugen;
falls der dynamische Verschiebungswert unter dem vorab definierten Mindestspannungsverschiebungswert liegt, wird die vorab definierte Mindestspannungsverschiebungsschwelle zu dem erhaltenen Spannungswert addiert, um den modifizierten Spannungswert für das Submodul zu erzeugen;
falls der dynamische Verschiebungswert den vorab definierten Höchstspannungsverschiebungswert überschreitet, wird der vorab definierte Höchstspannungsverschiebungswert zu dem erhaltenen Spannungswert addiert, um den modifizierten Spannungswert für das Submodul zu erzeugen;
ODER gemäß einer zweiten ODER-Alternative:
falls das Vorzeichen des Stroms im Ventil positiv ist, Vergleichen des erhaltenen Spannungswerts mit einer ersten Schwelle und:
falls der erhaltene Spannungswert kleiner als eine erste Schwelle ist, Multiplizieren des ersten Verschiebungsspannungswerts mit einem ersten Verstärkungswert und Subtrahieren des Ergebnisses der Multiplikation von dem erhaltenen Spannungswert, um den modifizierten Spannungswert zu erzeugen;
falls der erhaltene Spannungswert größer als die erste Schwelle ist, Multiplizieren des ersten Verschiebungsspannungswerts mit einem zweiten Verstärkungswert, der ein Vielfaches des ersten Verstärkungswerts ist, und Subtrahieren des Ergebnisses der Multiplikation von dem erhaltenen Spannungswert, um den modifizierten Spannungswert zu erzeugen;
falls das Vorzeichen des Stroms im Ventil negativ ist, Vergleichen des erhaltenen Spannungswerts mit einer zweiten Schwelle und:
falls der erhaltene Spannungswert größer als die zweite Schwelle ist, Multiplizieren des ersten Verschiebungsspannungswerts mit einem dritten Verstärkungswert und Addieren des Ergebnisses der Multiplikation zu dem erhaltenen Spannungswert, um den modifizierten Spannungswert zu erzeugen;
falls der erhaltene Spannungswert kleiner als die zweite Schwelle ist, Multiplizieren des ersten Verschiebungsspannungswerts mit einem vierten Verstärkungswert, der ein Vielfaches des dritten Verstärkungswerts ist, und Addieren des Ergebnisses der Multiplikation zu dem erhaltenen Spannungswert, um den modifizierten Spannungswert zu erzeugen;
ii) falls das Submodul nicht zuvor ausgewählt wurde:
Addieren des Submoduls zu einem Histogramm gemäß dem Spannungswert für das Submodul;
und
iii) Auswählen keiner Submodule, eines Submoduls oder mehr als eines Submoduls basierend auf deren Platzierung in dem Histogramm, das/die zu aktivieren ist/sind, um die gewünschte Ventilausgangsspannung zu erzeugen.

7. Modularer mehrstufiger Wandler nach Anspruch 6, wobei jedes Ventil weiter einen Schenkelreaktor umfasst.

8. Modularer mehrstufiger Wandler nach Anspruch 7, wobei der Schenkelreaktor eine Induktanz oder eine Reihenkombination einer Induktanz und eines Widerstandes umfasst.

## Revendications

1. Procédé pour sélectionner des sous-modules d'une vanne de convertisseur multiniveau modulaire de façon à générer une tension de sortie de vanne souhaitée, le procédé comprenant les étapes consistant à :
obtenir une valeur de tension pour chaque sous-module de la vanne indicative d'une tension à travers un élément de stockage d'énergie du sous-module ;
pour chaque sous-module de la vanne :
i) si le sous-module a été précédemment sélectionné :
si le signe dudit courant dans la vanne est positif, une première valeur de tension de décalage, qui est une valeur de décalage dynamique, est obtenue en calculant la différence entre un seuil de tension maximum et la valeur de tension obtenue pour le sous-module ;
si le signe de courant dans la vanne est négatif, la première valeur de tension de décalage, qui est une valeur de décalage dynamique, est obtenue en calculant la différence entre la valeur de tension obtenue pour le sous-module et un seuil de tension minimum ;
selon une première alternative-OU :
si le signe dudit courant dans la vanne est positif :
si la valeur de décalage dynamique est inférieure à une valeur de décalage de tension maximale prédéfinie et supérieure à une valeur de décalage de tension minimale prédéfinie, la valeur de décalage dynamique est soustraite de la valeur de tension obtenue pour le sous-module afin de générer la valeur de tension modifiée pour le sous-module ;
si la valeur de décalage dynamique est inférieure à la valeur de décalage de tension minimale prédéfinie, la valeur de décalage de tension minimale prédéfinie est soustraite de la valeur de tension obtenue pour générer la valeur de tension modifiée pour le sous-module ;
si la valeur de décalage dynamique atteint ou dépasse la valeur de décalage de tension maximale prédéfinie, la valeur de décalage de tension maximale prédéfinie est soustraite de la valeur de tension obtenue pour générer la valeur de tension modifiée pour le sous-module ;
si le signe du courant dans la vanne est négatif :
si la valeur de décalage dynamique est inférieure à la valeur de décalage de tension maximale prédéfinie et supérieure à une valeur de décalage de tension minimale prédéfinie, la valeur de décalage dynamique est ajoutée à la valeur de tension obtenue pour le sous-module afin de générer la valeur de tension modifiée pour le sous-module ;
si la valeur de décalage dynamique est inférieure à la valeur de décalage de tension minimale prédéfinie, la valeur de décalage de tension minimale prédéfinie est ajoutée à la valeur de tension obtenue pour générer la valeur de tension modifiée pour le sous-module ;
si la valeur de décalage dynamique dépasse la valeur de décalage de tension maximale prédéfinie, la valeur de décalage de tension maximale prédéfinie est ajoutée à la valeur de tension obtenue pour générer la valeur de tension modifiée pour le sous-module ;
OU selon une seconde alternative-OU :
si le signe du courant dans la vanne est positif, comparer la valeur de tension obtenur à un premier seuil et :
si la valeur de tension obtenue est inférieure à un premier seuil, multiplier la première valeur de tension de décalage par une première valeur de gain et soustraire le résultat de la multiplication de la valeur de tension obtenue pour générer la valeur de tension modifiée ;
si la valeur de tension obtenue est supérieure au premier seuil, multiplier la première valeur de tension de décalage par une deuxième valeur de gain, qui est un multiple de la première valeur de gain, et soustraire le résultat de la multiplication de la valeur de tension obtenue pour générer la valeur de tension modifiée ;
si le signe du courant dans la vanne est négatif, comparer la valeur de tension obtenue à un second seuil et :
si la valeur de tension obtenue est supérieure au second seuil, multiplier la première valeur de tension de décalage par une troisième valeur de gain et ajouter le résultat de la multiplication à la valeur de tension obtenue pour générer la valeur de tension modifiée ;
si la valeur de tension obtenue est inférieure au second seuil, multiplier la première valeur de tension de décalage par une quatrième valeur de gain, qui est un multiple de la troisième valeur de gain, et ajouter le résultat de la multiplication de la valeur de tension obtenue pour générer la valeur de tension modifiée ; et
ajouter le sous-module à un histogramme selon la valeur de tension modifiée pour le sous-module ;
ii) si le sous-module n'était pas précédemment sélectionné :
ajouter le sous-module à un histogramme selon la valeur de tension pour le sous-module
et
iii) sélectionner aucun sous-module, un sous-module ou plus d'un sous-module, sur la base de leur classement dans l'histogramme, à activer de manière à générer la tension de sortie de vanne souhaitée.

2. Procédé selon la revendication 1,
la seconde alternative-OU dudit procédé comprenant en outre les étapes consistant à :
si le signe du courant dans la vanne est positif, avant de comparer la valeur de tension obtenue au premier seuil, multiplier la première valeur de tension décalée par une valeur de gain pour obtenir une valeur de décalage de tension modifiée ; et
si le signe du courant dans la vanne est négatif, avant de comparer la valeur de tension obtenue à un second seuil, multiplier la première valeur de tension de décalage par la valeur de gain pour obtenir une valeur de décalage de tension modifiée.

3. Procédé selon la revendication 1 ou la revendication 2, dans lequel la seconde alternative-OU de la revendication 1 comprend en outre les étapes consistant à :
si le signe du courant dans la vanne est positif et que la première valeur de tension de décalage est inférieure à un seuil de valeur minimale, retenir la valeur du seuil de valeur minimale pour une utilisation ultérieure comme première valeur de tension de décalage ;
si le signe du courant dans la vanne est positif et que la première valeur de tension de décalage dépasse un seuil de valeur maximale, retenir la valeur du seuil de valeur maximale pour une utilisation ultérieure comme première valeur de tension de décalage ;
si le signe du courant dans la vanne est négatif et que la première valeur de tension de décalage est inférieure à un seuil de valeur minimale, retenir la valeur du seuil de valeur minimale pour une utilisation ultérieure comme première valeur de tension de décalage ;
si le signe du courant dans la vanne est négatif et que la première valeur de tension de décalage dépasse le seuil de valeur maximale, retenir la valeur du seuil de valeur maximale pour une utilisation ultérieure comme première valeur de tension de décalage ;

4. Programme informatique comprenant des instructions qui, lorsqu'elles sont exécutées par une unité de traitement, amènent l'unité de traitement à exécuter le procédé de l'une quelconque des revendications précédentes.

5. Système de traitement comprenant une ou plusieurs unités de traitement configurées pour exécuter le programme informatique de la revendication 4.

6. Convertisseur modulaire à plusieurs niveaux comprenant :
une pluralité de vanne, dans laquelle chaque vanne comprend :
une pluralité de sous-modules ;
un premier capteur configuré pour indiquer une valeur de tension pour chaque sous-module de la vanne ;
un second capteur configuré pour indiquer une polarité ou un signe d'un courant dans la vanne ;
et
une unité de commande configurée pour sélectionner des sous-modules de la vanne du convertisseur multiniveau modulaire afin de générer une tension de sortie de vanne souhaitée,
**caractérisé en ce que** ladite unité de commande est configurée, à la réception d'indications provenant dudit premier capteur et dudit second capteur, pour :
pour chaque sous-module de la vanne :
i) si le sous-module a été précédemment sélectionné :
si le signe dudit courant dans la vanne est positif, une première valeur de tension de décalage, qui est une valeur de décalage dynamique, est obtenue en calculant la différence entre un seuil de tension maximum et la valeur de tension obtenue pour le sous-module ;
si le signe de courant dans la vanne est négatif, la première valeur de tension de décalage, qui est une valeur de décalage dynamique, est obtenue en calculant la différence entre la valeur de tension obtenue pour le sous-module et un seuil de tension minimum ;
selon une première alternative-OU :
si le signe dudit courant dans la vanne est positif : si la valeur de décalage dynamique est inférieure à une valeur de décalage de tension maximale prédéfinie et supérieure à une valeur de décalage de tension minimale prédéfinie, la valeur de décalage dynamique est soustraite de la valeur de tension obtenue pour le sous-module afin de générer la valeur de tension modifiée pour le sous-module ;
si la valeur de décalage dynamique est inférieure à la valeur de décalage de tension minimale prédéfinie, la valeur de décalage de tension minimale prédéfinie est soustraite de la valeur de tension obtenue pour générer la valeur de tension modifiée pour le sous-module ;
si la valeur de décalage dynamique atteint ou dépasse la valeur de décalage de tension maximale prédéfinie, la valeur de décalage de tension maximale prédéfinie est soustraite de la valeur de tension obtenue pour générer la valeur de tension modifiée pour le sous-module ;
si le signe du courant dans la vanne est négatif :
si la valeur de décalage dynamique est inférieure à la valeur de décalage de tension maximale prédéfinie et supérieure à une valeur de décalage de tension minimale prédéfinie, la valeur de décalage dynamique est ajoutée à la valeur de tension obtenue pour le sous-module afin de générer la valeur de tension modifiée pour le sous-module ;
si la valeur de décalage dynamique est inférieure à la valeur de décalage de tension minimale prédéfinie, la valeur de décalage de tension minimale prédéfinie est ajoutée à la valeur de tension obtenue pour générer la valeur de tension modifiée pour le sous-module ;
si la valeur de décalage dynamique dépasse la valeur de décalage de tension maximale prédéfinie, la valeur de décalage de tension maximale prédéfinie est ajoutée à la valeur de tension obtenue pour générer la valeur de tension modifiée pour le sous-module ;
OU selon une seconde alternative-OU :
si le signe du courant dans la vanne est positif, comparer la valeur de tension obtenur à un premier seuil et :
si la valeur de tension obtenue est inférieure à un premier seuil, multiplier la première valeur de tension de décalage par une première valeur de gain et soustraire le résultat de la multiplication de la valeur de tension obtenue pour générer la valeur de tension modifiée ;
si la valeur de tension obtenue est supérieure au premier seuil, multiplier la première valeur de tension de décalage par une deuxième valeur de gain, qui est un multiple de la première valeur de gain, et soustraire le résultat de la multiplication de la valeur de tension obtenue pour générer la valeur de tension modifiée ;
si le signe du courant dans la vanne est négatif, comparer la valeur de tension obtenue à un second seuil et :
si la valeur de tension obtenue est supérieure au second seuil, multiplier la première valeur de tension de décalage par une troisième valeur de gain et ajouter le résultat de la multiplication à la valeur de tension obtenue pour générer la valeur de tension modifiée ;
si la valeur de tension obtenue est inférieure au second seuil, multiplier la première valeur de tension de décalage par une quatrième valeur de gain, qui est un multiple de la troisième valeur de gain, et ajouter le résultat de la multiplication de la valeur de tension obtenue pour générer la valeur de tension modifiée ;
ii) si le sous-module n'était pas précédemment sélectionné :
ajouter le sous-module à un histogramme selon la valeur de tension pour le sous-module ;
et
iii) sélectionner aucun sous-module, un sous-module ou plus d'un sous-module, sur la base de leur classement dans l'histogramme, à activer de manière à générer la tension de sortie de vanne souhaitée.

7. Convertisseur multiniveau modulaire selon la revendication 6, dans lequel chaque vanne comprend en outre un réacteur de branche.

8. Convertisseur modulaire multiniveau selon la revendication 7, dans lequel le réacteur de branche comprend une inductance ou une combinaison en série d'une inductance et d'une résistance.
